# EUROPÄISCHE PATENTSCHRIFT

(11) **EP 2 892 673 B1**
(45) Veröffentlichungstag und Bekanntmachung des Hinweises auf die Patenterteilung: **28.03.2018**
(21) Anmeldenummer: 13750007.0
(22) Anmeldetag: 01.08.2013
(51) Int. Cl.: B23H 11/00, H01R 39/24

(54) **ANTRIEBSVORRICHTUNG FÜR EINE DRAHTERODIERMASCHINE MIT EINER VON EINEM MOTOR ANGETRIEBENEN ROTATIONSSPINDEL SOWIE EINER STROMÜBERGABEVORRICHTUNG ZUR STROMÜBERGABE AUF EIN ROTIERENDES WERKSTÜCK ZUM EROSIVEN DREHEN**
DRIVE DEVICE FOR A WIRE EROSION MACHINE WITH A ROTATING SPINDLE DRIVEN BY A MOTOR AND A CURRENT TRANSFER DEVICE FOR TRANSFERRING CURRENT TO A ROTATING WORKPIECE FOR EROSIVE MACHINING
DISPOSITIF D'ENTRAÎNEMENT POUR MACHINE D'ÉTINCELAGE PAR FIL, POURVU D'UNE BROCHE ROTATIVE ENTRAÎNÉE PAR UN MOTEUR ET D'UN DISPOSITIF DE TRANSFERT DE COURANT DESTINÉ À TRANSFÉRER DU COURANT SUR UNE PIÈCE ROTATIVE POUR METTRE EN OEUVRE UNE ROTATION À ÉROSION

(30) Priorität: 10.09.2012 DE 102012108431
(43) Veröffentlichungstag der Anmeldung: 15.07.2015
(73) Patentinhaber: Hirschmann GmbH, 78737 Fluorn-Winzeln (DE)
(72) Erfinder: WEISSER, Norbert, 78737 Fluorn-Winzeln (DE)
(74) Vertreter: Westphal, Mussgnug & Partner Patentanwälte mbB
(86) Internationale Anmeldenummer: PCT/EP2013/066190
(87) Internationale Veröffentlichungsnummer: WO 2014/037170

(56) Entgegenhaltungen:
- DE-T2-602004 011 867
- JP-A- S6 156 831
- US-A- 4 071 795
- US-A1- 2003 024 825
- US-A1- 2003 052 564

## Beschreibung

Die Erfindung betrifft eine Antriebsvorrichtung für eine Drahterodiermaschine mit einer von einem Motor angetriebenen Rotationsspindel sowie einer Stromübergabevorrichtung zur Stromübergabe auf ein rotierendes Werkstück zum erosiven Drehen gemäß Oberbegriff des Patentanspruchs 1 und gemäß Oberbegriff des Patentanspruchs 3. Solche Stromübergabevorrichtungen sind aus der US 2003/024825 A1 bekannt. Bei der Drahterosion handelt es sich um ein formgebendes Fertigungsverfahren, das auf elektrischen Entladevorgängen zwischen einem als erste Elektrode dienenden Erodierdraht und einem als zweiter Elektrode dienenden zu bearbeitenden Werkstück beruht. Dabei wird der Draht sehr nahe (< 0,5 mm) an das Werkstück herangeführt, bis ein Funkenüberschlag stattfindet, der aus dem Werkstück Material abträgt. In der Regel dient der Draht als Kathode, das Werkstück selbst als Anode. Die Spannung liegt typischerweise in einem Bereich > 200 V.

Bei rotierenden (bis zu 4000U/min) sowie statisch indexierten Drahterodierarbeiten wird eine solche Rotier-Indexierspindel quer zum aufgestellten Draht positioniert. Hierbei besteht das Problem, dass über geeignete Mittel der Erodierstrom dem zu erodierenden Werkstück zugeführt werden muss. Grund hierfür ist das die Achse zum Gehäuse über die Lagerung isoliert aufgebaut ist und der Erodierstrom nicht wie üblich über den Maschinentisch und der Vorrichtung zum Werkstück gelangt. Die Stromübergabe erfolgte bisher über Kohlebürsten in einem Doppelschenkelbürstenhalter. Nachteile solcher Bürsten ist die Verschmutzung und die Folgen die der Abrieb solcher Bürsten verursacht (z. B. Grünspan in der Maschine, kürzere Lebensdauer der Filter, höherer Wartungsaufwand).

Aus der DE 60 2004 011 867 T2 ist eine kontaktierende Erdungsbürste zum Ableiten statischer Aufladungen einer Welle eines Elektromotors bekannt und ist bspw. als Schleifring bzw. als Wellenerdungsring ausgebildet, der aus einem ringförmigen Rahmen mit einem ringförmigen Kanal besteht, wobei mehrere elektrisch leitende Fäden in dem ringförmigen Kanal radial verlaufend angeordnet und elektrisch mit dem ringförmigen Rahmen verbunden sind, so dass elektrische Ladungen auf der Welle über den ringförmigen Rahmen, der mit dem Gehäuse des Elektromotors verbunden ist, abgeleitet werden.

Als elektrisch leitfähige Fäden werden feine haarartige Strukturen verwendet, die aus Kohlenstoffasern, rostfreiem Stahl, leitendem Kunststoff wie etwa Acryl- oder Nylonfasern oder irgendeinem anderen leitenden faserartigen Material bestehen und ausreichend klein sind, um in Anwesenheit eines elektrischen Felds eine Ionisierung zu induzieren. Es werden Fäden mit einem Durchmesser innerhalb eines Bereichs von etwa 5 Mikrometern bis etwa 100 Mikrometern verwendet. Weiterer Stand der Technik ist in den Druckschriften US 2003/024825 A1, JP S61 56831 A, sowie US 2003/052564 A1 offenbart.

Ausgehend von dem dargelegten Stand der Technik ist es Aufgabe der vorliegenden Erfindung, eine Antriebsvorrichtung für eine Drahterodiermaschine zum erosiven Drehen eines Werkstückes anzugeben, mit der die bei der Verwendung von Kohlebürsten auftretenden Nachteile beseitigt werden.

Diese Aufgabe wird gelöst durch eine Antriebsvorrichtung mit den Merkmalen des Patentanspruchs 1.

Eine solche Antriebsvorrichtung für eine Drahterodiermaschine mit einer von einem Motor angetriebenen Rotationsspindel sowie einer Stromübergabevorrichtung zur Stromübergabe auf ein rotierendes oder statisch indexiertem Werkstück zum erosiven Drehen oder einer statisch indexierten Schneidarbeit, wobei die Rotationsspindel eine Werkstückaufnahme zur Aufnahme des zu bearbeiteten Werkstückes aufweist, zeichnet sich erfindungsgemäß dadurch aus, dass die Stromübergabevorrichtung als wenigstens ein Sektor eines Kreisringzylinders ausgebildet ist, bei dem die Innenmantelfläche zur Stromzuführung radial verlaufenden elektrisch leitende Fäden aufweist, und die Stromübergabevorrichtung derart angeordnet ist, dass die distalen Enden der elektrisch leitenden Fäden einen elektrischen Kontakt mit der rotierenden oder statisch indexierten Rotier-Indexierspindel bilden.

Durch die Verwendung eines solchen Sektors eines Kreisringzylinders übertragen die elektrisch leitenden Fäden den Erodierstrom auf die isoliert aufgebaute Welle über die montierte Werkstückaufnahme auf das zu erodierende Werkstück. Wegen der Verwendung dieser elektrisch leitenden Fasern tritt im Wesentlichen keine Abnutzung dieser Fasern auf, so dass für die Stromübergabevorrichtung eine lange Lebensdauer erreicht wird. Auch entstehen keine Verschmutzungen an den Fasern, wie dies bei der Verwendung von Kohlebürsten auftreten kann, so dass dadurch eine stabile Funktionalität sichergestellt ist.

Besonders vorteilhaft ist es gemäß einer Ausgestaltung der Erfindung, wenn die Stromübergabevorrichtung mit einem Motorflansch des Motors verbunden wird. Damit lässt sich konstruktiv einfach eine Stromzuführung zu dieser Stromübergabevorrichtung realisieren.

Ferner wird die Aufgabe auch durch eine Antriebsvorrichtung mit den Merkmalen des Patentanspruchs 3 gelöst.

Eine solche Antriebsvorrichtung für eine Drahterodiermaschine mit einer von einem Motor angetriebenen Rotationsspindel sowie einer Stromübergabevorrichtung zur Stromübergabe auf ein rotierendes oder statisch indexiertem Werkstück zum erosivem Drehen oder einer statisch indexierten Schneidarbeit, wobei die Rotationsspindel eine Werkstückaufnahme zur Aufnahme des zu bearbeiteten Werkstückes aufweist, zeichnet sich erfindungsgemäß dadurch aus, dass die Stromübergabevorrichtung als wenigstens ein Sektor eines Kreisringzylinders ausgebildet ist, bei dem die Innenmantelfläche zur Stromzuführung radial verlaufenden elektrisch leitende Fäden aufweist, und die Stromübergabevorrichtung derart angeordnet ist, dass die distalen Enden der elektrisch leitenden Fäden einen elektrischen Kontakt mit dem rotierenden Werkstück bilden.

Auch eine solche Antriebsvorrichtung weist die oben genannten Vorteile im Zusammenhang mit der erstgenannten Lösung auf. Der Unterschied zur erstgenannten Lösung besteht darin, dass die Stromübergabevorrichtung nicht im Bereich der Rotationsspindel angeordnet ist, sondern sich direkt an dem zu bearbeitenden Werkstück befindet.

Besonders vorteilhaft ist es gemäß einer Weiterbildung der Erfindung hinsichtlich der beiden Lösungen, wenn die Rotationsspindel elektrisch isoliert in der Antriebsvorrichtung gelagert ist, so dass im Falle des Einsatzes eines Elektromotors als Motor für die Antriebsvorrichtung elektrische Probleme vermieden werden.

Es hat sich in vorteilhafter Weise ohne Funktionsverschlechterung herausgestellt, dass gemäß einer weiteren Ausgestaltung der Erfindung die Stromübergabevorrichtung mit einem Sektor eines Kreisringzylinders ausgebildet ist, dessen zugehöriger Mittelpunktswinkel gleich oder kleiner als 90°, vorzugsweise kleiner als 45° ist.

Vorzugsweise ist es weiterbildungsgemäß auch möglich eine Stromübergabevorrichtung mit einem Mittelpunktswinkel zwischen 180° und 90°, vorzugsweise mit 180° oder 90° auszubilden, so dass ein Halbring entsteht. Ferner können auch zwei solcher Halbringe als Stromübergabevorrichtung verwendet werden.

Weiterhin kann weiterbildungsgemäß die Stromübergabevorrichtung einen Mittelpunktswinkel zwischen 360° und 180° aufweisen, vorzugsweise 360°, so dass damit die Stromübergabevorrichtung als vollständiger Ring ausgebildet ist.

Ferner wird gemäß einer bevorzugten Weiterbildung der Erfindung der Motor der Antriebsvorrichtung als Elektromotor ausgebildet. Damit wird eine robuste Antriebsvorrichtung realisiert, mit der auch die hohen Drehzahlen für das erosive Drehen erreicht werden.

Schließlich sind erfindungsgemäß die elektrisch leitenden Fäden als Mikrofasern ausgebildet. Entsprechend den in dem aus der DE 60 2004 011 867 T2 bekannten Wellenerdungsring verwendeten elektrisch leitfähigen Fäden können auch die elektrisch leitfähigen Fäden der Stromübergabevorrichtung aus Kohlenstofffasern, rostfreiem Stahl, leitendem Kunststoff wie etwa Acryl- oder Nylonfasern oder irgendeinem anderen leitenden faserartigen Material hergestellt werden.

Die Erfindung wird nachstehend anhand von Ausführungsbeispielen unter Bezugnahme auf die beigefügten Figuren ausführlich beschrieben. Es zeigen:
- Figur 1: eine Antriebsvorrichtung für eine Drahterodiermaschine mit einer Stromübergabevorrichtung als erstes Ausführungsbeispiel gemäß der Erfindung,
- Figur 2: eine Darstellung eines Teillängsschnittes der Antriebsvorrichtung nach Figur 1,
- Figur 3: eine Schnittdarstellung des Schnittes A-A gemäß Figur 2,
- Figur 4: eine Antriebsvorrichtung für eine Drahterodiermaschine mit einer Stromübergabevorrichtung als zweites Ausführungsbeispiel gemäß der Erfindung,
- Figur 5: eine perspektivische Darstellung der Stromübergabevorrichtung der Antriebsvorrichtung nach Figur 1 und Figur 4, und
- Figur 6: Darstellungen von Stromübergabevorrichtungen mit unterschiedlichen Geometrien.

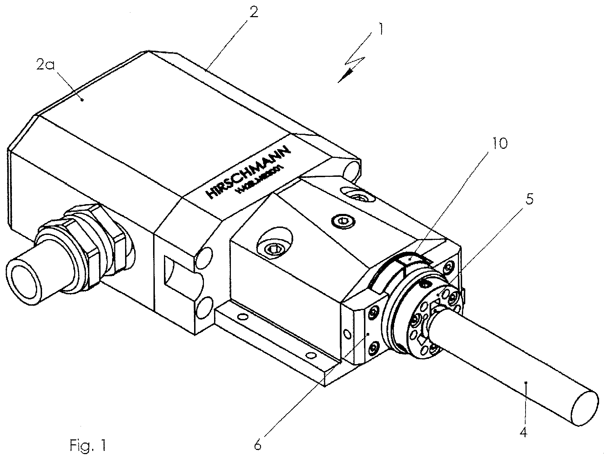

Die Antriebsvorrichtung 1 nach Figur 1 wird auf einen Maschinentisch einer Drahterodiermaschine (in den Figuren nicht dargestellt) montiert, so dass ein von der Antriebsvorrichtung 1 aufgenommenes Werkstück 4 rotierend oder statisch indexiert durch erosives Drehen bzw. einer statisch indexierten Schneidarbeit mittels eines Erodierdrahtes (nicht dargestellt) bearbeitet werden kann.

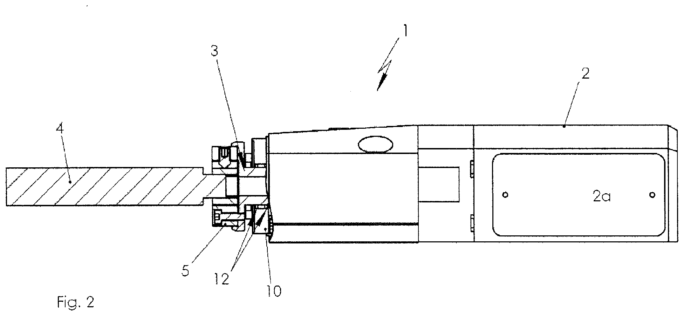

Gemäß den Figuren 1 und 2 umfasst diese Antriebsvorrichtung 1 einen Elektromotor 2 mit einem Gehäuse 2a, der eine Rotationsspindel 3 antreibt, deren außenseitiges Ende als Werkstückaufnahme ein Spannfutter 5 trägt, mit dem das zu bearbeitende Werkstück 4, das in den Figuren als Rundstab dargestellt ist, eingespannt wird. Die Rotationsspindel 3 ist in dem Elektromotor 2 elektrisch isoliert gelagert.

Der für die Erodierarbeiten erforderliche Erodierstrom wird über eine Stromübergabevorrichtung 10 auf die Rotationsspindel 3 geführt, von wo aus dieser Erodierstrom über das Spannfutter 5 in das Werkstück 4 geführt wird.

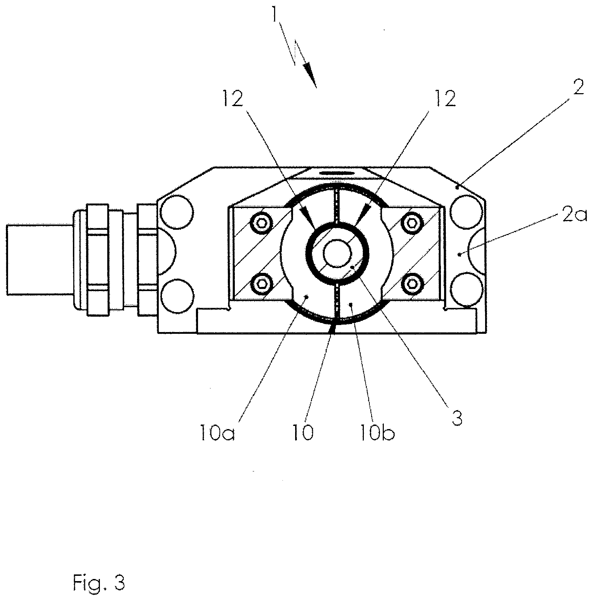

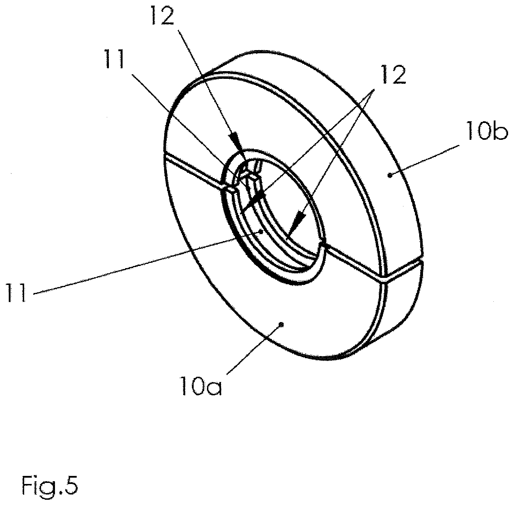

Diese Stromübergabevorrichtung 10 ist in Figur 5 als kreisringzylinderförmiger Körper dargestellt und setzt sich aus zwei Halbkreissektoren 10a und 10b eines Kreisringzylinders zusammen. Jeder Halbkreissektor 10a und 10b nimmt in einem Gehäuse einen mit entsprechender Form ausgebildeten elektrisch leitenden Körper auf, wobei mit diesem elektrisch leitenden Körper auf der Innenmantelfläche 11 des jeweiligen Halbkreissektors 10a und 10b radial nach innen verlaufende Mikrofasern 12 verbunden sind. Wenn die Stromübergabevorrichtung 10 gemäß den Figuren 1 und 2 mit einem als Spannpratzen ausgebildeten stirnseitigen Flansch 6 an das Motorgehäuses 2a montiert wird, umschließen die Mikrofasern 12 der beiden Halbkreissektoren 10a und 10b der Stromübergabevorrichtung 10 die Rotorspindel 3 manschettenartig, wie dies aus Figur 3 ersichtlich ist, so dass dadurch ein elektrischer Kontakt mit der rotierenden Rotorspindel 3 hergestellt wird.

Die Mikrofasern 12 gemäß Figur 5 sind auf den Innenmantelflächen 11 der beiden Halbkreissektoren 10a und 10b der Stromübergabevorrichtung 10 strukturiert angeordnet. So verlaufen jeweils zwei parallele Reihen von Mikrofasern 12 in einer stegartigen Struktur in Umfangsrichtung auf der Innenmantelfläche 11 der beiden Halbkreissektoren 10a und 10b.

Der so zum Werkstück 4 geleitete Erodierstrom entlädt sich über eine zum Erodierdraht (nicht dargestellt) gebildete Funkenstrecke, um einen entsprechenden Materialabtrag zu bewirken.

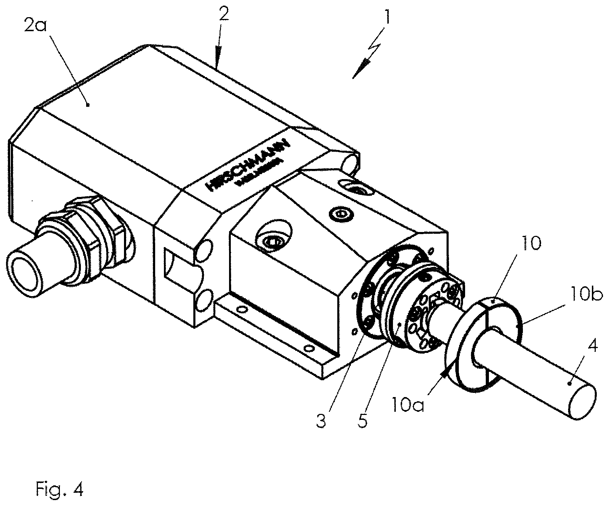

In Figur 4 ist ein weiteres Ausführungsbeispiel einer Antriebsvorrichtung 1 dargestellt, welche in gleicher Weise wie jene nach Figur 1 aufgebaut ist, jedoch mit dem Unterschied, dass die Stromübergabevorrichtung 10 nicht mit einem Flansch 6 an das Motorengehäuse 2a montiert ist, sondern direkt als Stromübergabevorrichtung 10 auf dem rundstabförmigen Werkstück 4 angeordnet ist, welche entsprechend von Figur 5 aus zwei Halbkreissektoren 10a und 10b aufgebaut ist und eine kreisringzylindrische Kontur aufweist. Bei dieser Lage der Stromübergabevorrichtung 10 umschließen die Mikrofasern 12 manschettenartig das Werkstück 4, so dass der Erodierstrom direkt von den Mikrofasern 12 in das Werkstück 4 fließen kann.

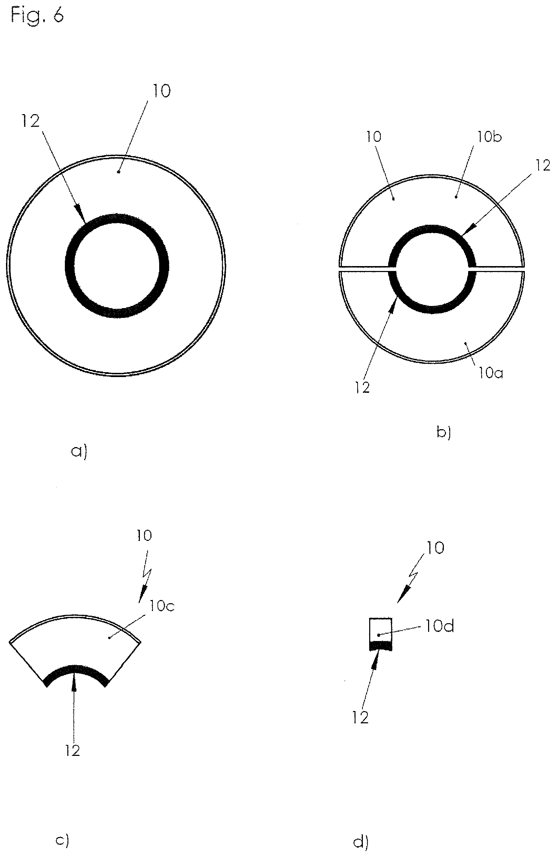

Die Stromübergabevorrichtung 10 kann in verschiedenen Geometrien ausgeführt werden. Die in den Antriebsvorrichtungen 1 gemäß den Figuren 1 und 4 eingesetzte Stromübergabevorrichtung 10 besteht aus zwei Halbkreissektoren 10a und 10b eines Kreisringzylinders, wie dies im Zusammenhang mit der Beschreibung der Figur 5 bereits erläutert wurde. Diese Geometrie zeigt in einer Seitenansicht nochmals Figur 6b.

Die Stromübergabevorrichtung 10 kann auch als vollständiger Kreisringzylinder entsprechend der Darstellung nach Figur 6a ausgebildet werden, wobei auf der Innenmantelfläche in zwei parallelen Reihen die Mikrofasern 12 in Umlaufrichtung verlaufend angeordnet sind.

Die Stromübergabevorrichtung 10 muss in ihrer äußeren Kontur nicht einem Kreisringzylinder entsprechen, sondern es reicht auch aus, nur einen Sektor eines solchen Kreisringzylinders als Stromübergabevorrichtung 10 entsprechend den Figuren 6c und 6d zu verwenden.

So entspricht die Stromübergabevorrichtung 10 nach Figur 6c einem Kreisringsektor 10c mit einem Mittelpunktswinkel von ca. 90°. Auch die Innenmantelfläche dieser Stromübergabevorrichtung 10 weist in zwei Reihen angeordnete Mikrofasern 12 auf.

Die Stromübergabevorrichtung 10 nach Figur 6d ist mit einem Kreisringsenktor 10d ausgebildet, dessen Mittelpunktswinkel kleiner als 45° ist. Auch dieser Kreisringsektor 10d ist auf seiner Innenmantelfläche mit in zwei Reihen angeordneten Mikrofasern 12 ausgebildet.

### Bezugszeichen

- 1: Antriebsvorrichtung
- 2: Motor der Antriebsvorrichtung 1
- 3: Rotationsspindel oder Rotier-Indexierspindel des Motors 2
- 4: Werkstück
- 5: Werkstückaufnahme, Spannfutter
- 6: Motorflansch

- 10: Stromübergabevorrichtung
- 10a: Sektor der Stromübergabevorrichtung 10
- 10b: Sektor der Stromübergabevorrichtung 10
- 10c: Sektor der Stromübergabevorrichtung 10
- 10d: Sektor der Stromübergabevorrichtung 10
- 11: Innenmantelfläche der Stromübergabevorrichtung 10
- 12: elektrisch leitende Fäden, Mikrofasern

## Patentansprüche

1. Antriebsvorrichtung (1) für eine Drahterodiermaschine mit einer von einem Motor (2) angetriebenen Rotier-Indexierspindel (3) sowie einer Stromübergabevorrichtung (10) zur Stromübergabe auf ein rotierendes oder statisch indexiertem Werkstück (4) zum erosiven Drehen oder einer statisch indexierten Schneidarbeit, wobei die Rotier-Indexierspindel (3) eine Werkstückaufnahme (5) zur Aufnahme des zu bearbeiteten Werkstückes (4) aufweist,
**dadurch gekennzeichnet, dass**
- die Stromübergabevorrichtung (10) als wenigstens ein Sektor (10a, 10b, 10c, 10d) eines Kreisringzylinders ausgebildet ist, bei dem die Innenmantelfläche (11) zur Stromzuführung radial verlaufenden elektrisch leitende Fäden aufweist (12), die als Mikrofasern ausgebildet sind, und die Stromübergabevorrichtung (10) derart angeordnet ist, dass die distalen Enden der elektrisch leitenden Fäden (12) einen elektrischen Kontakt mit der rotierenden oder indexierten Rotier-Indexierspindel (3) bilden.

2. Antriebsvorrichtung (1) nach Anspruch 1, **dadurch gekennzeichnet, dass** die Stromübergabevorrichtung (10) mit einem Motorflansch (6) des Motors verbunden wird.

3. Antriebsvorrichtung (1) für eine Drahterodiermaschine mit einer von einem Motor (2) angetriebenen Rotier-Indexierspindel (3) sowie einer Stromübergabevorrichtung (10) zur Stromübergabe auf ein rotierendes indexiertes Werkstück (4) zum erosiven Drehen oder einer statisch indexierten Schneidarbeit, wobei die Rotier-Indexierspindel (3) eine Werkstückaufnahme (6) zur Aufnahme des zu bearbeiteten Werkstückes (4) aufweist,
**dadurch gekennzeichnet, dass**
- die Stromübergabevorrichtung (10) als wenigstens ein Sektor (4a, 4b, 4c, 4d) eines Kreisringzylinders ausgebildet ist, bei dem die Innenmantelfläche (11) zur Stromzuführung radial verlaufenden elektrisch leitende Fäden (12) aufweist, die als Mikrofasern ausgebildet sind, und
- die Stromübergabevorrichtung (10) derart angeordnet ist, dass die distalen Enden der elektrisch leitenden Fäden (12) einen elektrischen Kontakt mit dem rotierenden oder indexierten Werkstück (4) bilden.

4. Antriebsvorrichtung (1) nach einem der vorhergehenden Ansprüche,
**dadurch gekennzeichnet, dass**
die Rotier-Indexierspindel (3) elektrisch isoliert in dem Motor (2) gelagert ist.

5. Antriebsvorrichtung (1) nach einem der vorhergehenden Ansprüche,
**dadurch gekennzeichnet, dass**
die Stromübergabevorrichtung (10) mit einem Sektor (10d) eines Kreisringzylinders ausgebildet ist, dessen zugehöriger Mittelpunktswinkel gleich oder kleiner als 90°, vorzugsweise kleiner als 45° ist.

6. Antriebsvorrichtung (1) nach einem der Ansprüche 1 bis 3,
**dadurch gekennzeichnet, dass**
die Stromübergabevorrichtung (10) mit einem Sektor (10a, 10b, 10c) eines Kreisringzylinders ausgebildet ist, dessen zugehöriger Mittelpunktswinkel einen Wert zwischen 180° und 90° aufweist, vorzugsweise 180° oder 90° beträgt.

7. Antriebsvorrichtung (1) nach Anspruch 6,
**dadurch gekennzeichnet, dass**
die Stromübergabevorrichtung (10) mit zwei identischen Sektoren (4a, 4b) eines Kreisringzylinders mit jeweils einem Mittelpunktswinkel von 180° ausgebildet ist.

8. Antriebsvorrichtung (1) nach einem der Ansprüche 1 bis 3,
**dadurch gekennzeichnet, dass**
die Stromübergabevorrichtung (10) mit einem Sektor eines Kreisringzylinders ausgebildet ist, dessen zugehöriger Mittelpunktswinkel einen Wert zwischen 360° und 180° aufweist, vorzugsweise 360° beträgt.

9. Antriebsvorrichtung (1) nach einem der vorhergehenden Ansprüche,
**dadurch gekennzeichnet, dass**
der Motor (2) als Elektromotor ausgebildet ist.

## Claims

1. Drive device (1) for a wire erosion machine with a rotating indexing spindle (3) driven by a motor (2) as well as a current transfer device (10) for transferring current to a rotating or statically indexed workpiece (4) for erosive rotation or for a statically indexed cutting task, wherein the rotating indexing spindle (3) has a workpiece holder (5) for holding the workpiece (4) to be machined, **characterised in that** the current transfer device (10) is configured as at least one sector (10a, 10b, 10c, 10d) of an annular cylinder, wherein the inner surface (11) has radially extending electrically conductive filaments (12) configured as microfibres for current supply, and the current transfer device (10) is arranged in such a way that the distal ends of the electrically conductive filaments (12) make an electrical contact with the rotating or indexed rotating indexing spindle (3).

2. Drive device (1) according to claim 1, **characterised in that** the current transfer device (10) is connected to a motor flange (6) of the motor.

3. Drive device (1) for a wire erosion machine with a rotating indexing spindle (3) driven by a motor (2) as well as a current transfer device (10) for transferring current to a rotating indexed workpiece (4) for erosive rotation or for a statically indexed cutting task, wherein the rotating indexing spindle (3) has a workpiece holder (6) for holding the workpiece (4) to be machined, **characterised in that**
- the current transfer device (10) is configured as at least one sector (4a, 4b, 4c, 4d) of an annular cylinder, wherein the inner surface (11) has radially extending electrically conductive filaments (12) configured as microfibres for current supply, and
- the current transfer device (10) is arranged in such a way that the distal ends of the electrically conductive filaments (12) make an electrical contact with the rotating or indexed workpiece (4).

4. Drive device (1) according to one of the preceding claims, **characterised in that** the rotating indexing spindle (3) is mounted in an electrically insulated manner in the motor (2).

5. Drive device (1) according to one of the preceding claims, **characterised in that** the current transfer device (10) is designed with a sector (10d) of an annular cylinder, of which the associated centre angle is equal to or less than 90°, preferably less than 45°.

6. Drive device (1) according to one of claims 1 to 3, **characterised in that** the current transfer device (10) is designed with a sector (10a, 10b, 10c) (10a) of an annular cylinder, of which the associated centre angle has a value between 180° and 90°, and is preferably 180° or 90°.

7. Drive device (1) according to claim 6, **characterised in that** the current transfer device (10) is configured with two identical sectors (4a, 4b) of an annular cylinder each having a centre angle of 180°.

8. Drive device (1) according to one of claims 1 to 3, **characterised in that** the current transfer device (10) is designed with a sector of an annular cylinder, of which the associated centre angle has a value between 360° and 180°, and is preferably 360°.

9. Drive device (1) according to one of the preceding claims, **characterised in that** the motor (2) is configured as an electric motor.

## Revendications

1. Dispositif d'entraînement (1) d'une machine d'électroérosion à fil (2) comprenant une broche d'indexation-rotative (3) ainsi qu'un dispositif de transfert de courant (10) permettant le transfert de courant sur une pièce indexée (4) mobile en rotation ou statique pour permettre une rotation érosive ou un travail de coupe indexé statique, la broche d'indexation-rotative (3) comprenant un logement de réception (5) d'une pièce (4) à usiner,
**caractérisé en ce que**
le dispositif de transfert de courant (10) est réalisé sous la forme d'au moins un secteur (10a, 10b, 10c, 10d) d'un cylindre annulaire dont la surface enveloppe interne (11) comporte, des brins électriquement conducteurs (12) d'étendant radialement par rapport à l'alimentation en courant qui sont réalisés sous la forme de microfibres, et le dispositif de transfert de courant (10) est monté de sorte que les extrémités distales des brins électriquement conducteurs (12) forment un contact électrique avec la broche d'indexation-rotative (3) mobile en rotation ou
indexée.

2. Dispositif d'entraînement (1) conforme à la revendication 1,
**caractérisé en ce que**
le dispositif de transfert de courant (10) est relié à une bride (6) du
moteur.

3. Dispositif d'entraînement (1) d'une machine d'électroérosion à fil comprenant une broche d'indexation-rotative (3) entraînée par un moteur (2) ainsi qu'un dispositif de transfert de courant (10) permettant le transfert de courant sur une pièce indexée rotative (4) pour permettre une rotation érosive ou un travail de coupe indexé statique, la broche d'indexation-rotative (3) comportant un logement de réception (6) de réception d'une pièce (4) à usiner,
**caractérisé en ce que**
le dispositif de transfert de courant (10) est réalisé sous la forme d'au moins un secteur (4a, 4b, 4c, 4d) d'un cylindre annulaire, dont la surface enveloppe interne (11) comporte, des brins électriquement conducteurs (12) s'étendant radialement par rapport à l'alimentation en courant qui sont réalisés sous la forme de microfibres, et
le dispositif de transfert de courant (10) est monté de sorte que les extrémités distales des brins électriquement conducteurs (12) forment un contact électrique avec la pièce rotative ou indexée (4).

4. Dispositif d'entraînement (1) conforme à l'une des revendications précédentes,
**caractérisé en ce que**
la broche d'indexation-rotative (3) est montée dans le moteur (2) en étant électriquement isolée.

5. Dispositif d'entraînement (1) conforme à l'une des revendications précédentes,
**caractérisé en ce que**
le dispositif de transfert de courant (10) est réalisé avec un secteur (10d) d'un cylindre annulaire dont l'angle au centre est égal ou inférieur à 90°, et de préférence inférieur à 45°.

6. Dispositif d'entraînement (1) conforme à l'une des revendications
1 à 3,
**caractérisé en ce que**
le dispositif de transfert de courant (10) est réalisé avec un secteur (10a, 10b, 10c) d'un cylindre annulaire dont l'angle au centre a une valeur comprise entre 180° et 90°, de préférence égale à 180° ou à 90°.

7. Dispositif d'entraînement (1) conforme à la revendication 6,
**caractérisé en ce que**
le dispositif de transfert de courant (10) est réalisé avec deux secteurs identiques (4a, 4b) d'un cylindre annulaire ayant chacun un angle au centre de 180°.

8. Dispositif d'entraînement (1) conforme à l'une des revendications
1 à 3,
**caractérisé en ce que**
le dispositif de transfert de courant (10) est formé avec un secteur d'un cylindre annulaire dont l'angle au centre a une valeur comprise entre 360° et 180° et est de préférence égal à 360°.

9. Dispositif d'entraînement (1) conforme à l'une des revendications précédentes,
**caractérisé en ce que**
le moteur (2) est réalisé sous la forme d'un moteur électrique.
